# EUROPEAN PATENT SPECIFICATION

(11) **EP 2 382 422 B1**
(45) Date of publication and mention of the grant of the patent: **23.04.2014**
(21) Application number: 10701038.1
(22) Date of filing: 06.01.2010
(51) Int. Cl.: F24B 7/02, F24D 11/00, F24H 6/00, F24B 1/187

(54) **STOVE COMPRISING AN APPARATUS FOR CAPTURING HEAT**
OFEN UMFASSEND EINE WÄRMERÜCKGEWINNUNGSVORRICHTUNG
POELE COMPRENANT UN APPAREIL DE RÉCUPÉRATION DE LA CHALEUR

(30) Priority: 09.01.2009 GB 0900259; 19.03.2009 GB 0904718
(43) Date of publication of application: 02.11.2011
(73) Proprietor: Kinxerg Limited, Mold, Flintshire CH7 5NX (GB)
(72) Inventor: REDFORD, Simon, Mold Flintshire CH7 5NX (GB)
(74) Representative: Hamilton, Alistair
(86) International application number: PCT/GB2010/050013
(87) International publication number: WO 2010/079352

(56) References cited:
- FR-A1- 2 885 994
- JP-A- 60 023 728
- US-A- 4 143 638
- US-A- 4 325 353
- US-A- 4 335 703
- US-A1- 2002 014 234

## Description

This invention relates to a stove comprising an apparatus for capturing heat. In particular, it relates to a stove whereby the heat can be transferred to a central heating system. In the context of this invention, the term 'stove' is used as a generic term for apparatus to allow enclosed burning of solid fuels. It does not necessarily imply a stove that can be used for cooking, although some do offer cooking or warming plates. Moreover, the invention is described principally in connection with wood-burning stoves, because this is the context in which the greatest potential benefit can be obtained. However, it can also find application to stoves intended to burn solid fossil fuels (such as coal) or to multifuel stoves.

Burning wood on open fires and in stoves plays a small but increasing role as a practical source of renewable, biomass residential heat. Heat produced by burning wood can displace heat produced by burning fossil fuels in central heating systems, thereby saving costs for the householder and reducing carbon emissions.

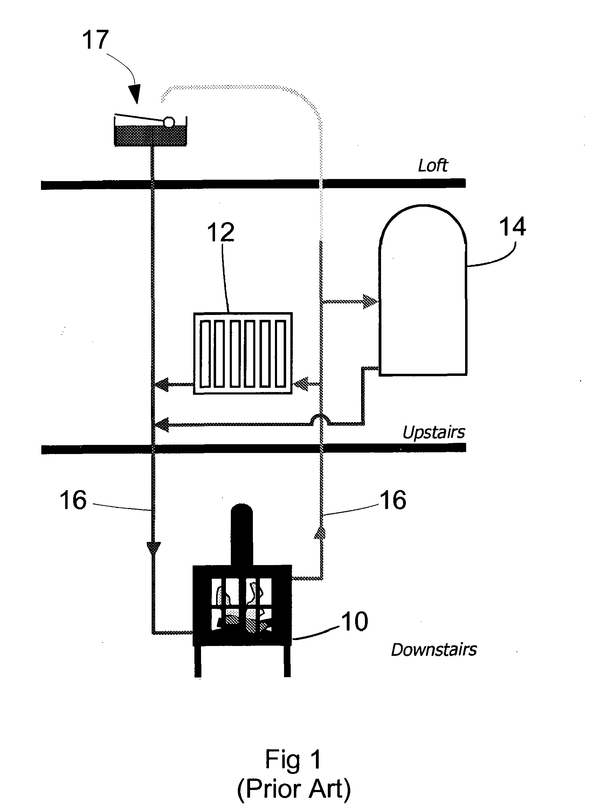

To maximise the benefit of burning wood in a modem stove, some of the heat produced should preferably be dissipated throughout a building in which it is installed to offset the amount of heat required from fossil-fuel based heating systems. One way in which this has traditionally been achieved is by incorporating a back boiler into a solid-fuel stove. As a stove has a relatively high thermal mass and limited burn control, back boilers need to be connected to a 'gravity fed' circuit to ensure heat can be dissipated without having to rely on a pumped water circuit. Failure to circulate water through a back boiler might lead to potentially explosive boiling of the water in the jacket. The term 'gravity fed' refers to natural circulation caused by the lower density of hot water leaving the top of the back boiler being displaced upwards by the higher density of cooler water entering the bottom of the back boiler, so forming a natural thermal circulation. As the thermal circulation force is quite weak compared to a pumped system, large-bore pipes must be used (typically 28mm) to reduce pressure losses associated with circulation and the primary heat sink (a radiator or a hot water tank) must be relatively close to and above the stove, and cannot be turned off. A typical arrangement for a stove 10 with a back boiler is shown in Figure 1. In the system of Figure 1, the radiators 12 and the indirect hot-water cylinder 14 must be able to dissipate all of the heat from the back boiler to avoid boiling of the water. The pipes of the main circuit 16 are of large (28mm) diameter. Most back boiler systems must also be open vented with a header tank 17 in the loft. Installation of such a large-bore system is inconvenient and expensive.

It is, in principle, possible to heat a whole house from a large stove with a gravity-fed radiator system. However, most stoves do not have sufficient output to heat a whole house, and few people would want to rely on manual feeding of logs or coal to maintain heat and hot water in the home. The majority of households with a stove will also have gas, oil or electric central heating, such that the stove provides an additional heat source to supplement the main heating system and, to some extent, its fuel consumption; this is likely to become far more prevalent as the costs of fossil fuels have escalated dramatically in recent times.

Systems are available to link the output from a gravity-fed stove circuit with a central heating system that include either 'neutraliser' tanks, heat exchangers or combined gravity and pumped systems. Neutralisers offer a comprehensive solution, but are complex, expensive, cannot readily be retrofitted into an existing central heating system, and are incompatible with modern, sealed central heating systems. They have various different circuits, whether pumped or naturally circulated, connected together at a single (hydraulically neutral) point, whereby each circuit will take and return the same flow of water and cannot hydraulically interfere with one another, although thermally the water streams mix in a hot water tank.

An aim of this invention is to provide apparatus by means of which heat from a stove can be used to supplement heat input into a central heating system, the apparatus being compatible with an existing central heating system, including sealed systems, and being fail-safe in the event of an electrical power failure.

A particular, but not exclusive, aim of this invention is recovery of heat from outer surfaces of stoves, especially modem, efficient stoves. There is little merit in trying to recover heat from the chimney gases of efficient stoves since only a small part of the total heat output of such stoves is carried in the chimney gases. Taking heat from the chimney gases may cause problems: cooler gasses tend to form condensates in the chimney, which can cause tars and creosotes to accumulate in the chimney, and an insufficiently warm chimney can dramatically reduce the convective 'draw' required for good combustion. Heat exchangers that are exposed to combustion gases are likely to suffer from fouling by combustion products. Moreover, if a heat exchanger is located in a chimney, it is not an easy matter to divert heat from the heat exchanger such that it can be discharged into a room surrounding the stove. JP-A-60 023728 discloses one such system for extracting heat from combustion gases, in which convection is normally used to direct combustion gases to a heat exchanger to heat water for an underfloor heating system. A fan can be activated to divert flow of the combustion gases to heat the surroundings rapidly. A sensor is provided to ensure that incomplete combustion is prevented.

To this end, from a first aspect, the invention provides a stove as set forth in claim 1.

During operation of the stove, operation in the first mode minimises the hot air flowing in the heat exchanger, and hot air carrying a maximum amount of heat is passed to the surroundings of the stove. Therefore, a minimum of heat is transferred to the water and the stove acts as a room heater. However, during operation in the second mode, heat is transferred from the heated air to water flowing within the water side of the heat exchanger. This later condition allows heat from the stove to be transferred to another heating system, hot water system, etc.

In the context of this specification, "natural convection" and "forced convection" should be taken as having their normal, technical meaning. Put simply, natural convection is the flow of air that occurs due to buoyancy pressure created by the heating of air, and forced convection is the flow of air due to pressure created by an active device, such as a fan.

Air within the air duct typically flows in opposite directions in the first and second modes. Most typically, in the first mode it flows generally upward (although it may be that it does not flow upward throughout its entire flow path), being driven by natural convection. Such an arrangement has been found to offer a system in which the flow of air and transfer of heat can be controlled predictably and easily.

The control means include a fan that is operable to induce a flow of air in the apparatus during operation in the second mode, such a flow typically being in a direction opposite to that in which it would flow due to natural convection. More particularly, the fan may be operable to draw air from the surroundings into the air duct for heating by the stove and then to the heat exchanger. Thus, when the fan is operating, heat is transferred to the heat exchanger. Moreover, when the fan is not operating, air may be drawn from the surroundings for heating by the stove, and subsequently returned to the surroundings by natural convection.

The state of the control means (and therefore the mode of operation of the apparatus) is primarily determined by whether or not the fan is running. Automatic control of a fan is a straightforward matter, so this provides a convenient control system.

Embodiments of the invention may include bypass means that includes a closable opening to surrounding air in the duct between the stove and the heat exchanger. The bypass can provide a low-resistance path for air to flow under natural convection when the apparatus is operating in the first mode. The bypass means includes a closable opening to surrounding air in the duct between the stove and the heat exchanger. For example, a flap may be provided to close the opening.

In embodiments of the invention, the air duct may include a plate, a first portion of the air duct being defined as a chamber that is formed between the plate and a heating surface of a stove.

A second portion of the air duct may connect the lower part of the first portion of the air duct to the air side of the heat exchanger. At least part of the control means may be located within the second portion of the air duct.

In typical embodiments, the air duct causes air to flow over one or more external heating surfaces of a stove. These external heating surfaces may include heat transfer fins. The external heating surfaces typically include one or more sides of the stove, and may further include the rear of the stove.

Various types of heat exchangers may be used. For example, the heat exchanger may include a fin-and-tube heat exchanger element.

Embodiments may further include an outer cover that creates a second air duct between itself and the cover. This can be disposed to increase the efficiency of the apparatus. In such embodiments, air can be caused to flow in the second air duct by natural convection to reduce the outer casing temperature of the apparatus.

Preferably the control means is fail-safe, such that it diverts air from the heat exchanger in the event of there being insufficient flow of water within its water side. This ensures that the heat exchanger is protected from damage by overheating.

The apparatus for capturing heat may be adapted to capture heat from one or more of a side surface, a top surface or a rear surface of the stove.

From a second aspect, the invention provides a heating installation that includes a stove according to the first aspect of the invention and a central heating system that includes a pumped water circulation circuit that operates to transport heat from a boiler to one or more radiators, the water side of the heat exchanger being connected to the circulation circuit such that water from the circulation circuit is caused to flow through the heat exchanger while the pump of the circulation circuit is operational. In embodiments of this aspect of the invention, the control means may operate to minimise the flow of heated air from the stove to the heat exchanger when the pump of the circulation system is not operational.

The stove may be connected in series with or in parallel with radiators in the heating system. Embodiments in which the stove is connected in parallel with the radiators may further include a pump connected in series with the heat exchanger of the stove that can be operated independently of the central heating system pump to transfer heat from the stove to the radiators. A non-return valve may additionally be provided to prevent flow through the stove heat exchanger when the central heating system is running but the stove is not lit.

Embodiment of the invention will now be described in detail, by way of example, and with reference to the accompanying drawings, in which:
Figure 1 is a diagram of a conventional back boiler system, and has already been discussed;
Figure 2 is a diagram of a stove upon which an embodiment of the invention can be based;
Figures 3a and 3b illustrate an embodiment of the invention operating, respectively, in a first and a second mode;
Figures 4a and 4b show the stove of Figures 3a and 3b incorporated into a central heating system in two alternative configurations;
Figure 5 illustrates the heat output that can be obtained from the embodiment of Figures 3a and 3b;
Figure 6 shows a central heating system that is a modification of the system of Figures 3a and 3b; and
Figure 7 shows an alternative form of a stove embodying the invention.

As an introduction to the embodiment, operation of a modem wood-burning stove will now be discussed.

Heat transfer from a stove to its surroundings (typically, a room in a building) occurs by way of radiation (A) and convection (B) from the surfaces of the stove to air within a room in which the stove is located and there is also heat lost (C) up the chimney 28. For a well-designed stove, the chimney loss should be less that 30%, and may be less than 20% for some of the most efficient new designs. The proportions of radiative and convective heat transfer can vary depending on the design and temperature of the stove sides.

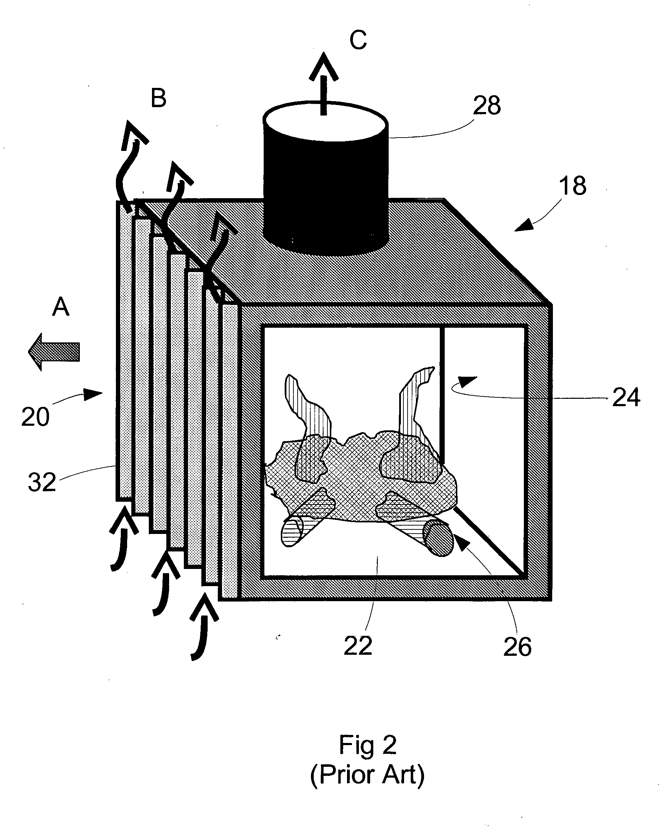

For a stove 18 with finned sides 20, as shown in Figure 2, the majority of the heat generated by the burning fuel is transferred by convection from the stove sides 20, with a higher proportion of radiant heat transfer from a glass front 22 of the stove 18, where such a front is fitted, as in this example. Bigger and cooler surface areas are provided in stoves in which it is intended that convection should be maximised, with typical operating surface temperatures in the region of 200-250°C. If a greater radiative output is required, higher surface temperatures and flat sides (less roughness and/or no fins) are generally preferred.

Convective heat transfer also takes place from the top of the stove 18, but more heat is transferred from external vertical surfaces than horizontal surfaces due to the induced convective airflow. Little heat is transferred from the bottom of the stove, as combustion air is usually drawn in at the bottom of the stove, and the grate and ashpan act as heat shields. (Some stoves also incorporate a separate, protective external heat shield.)

There is little merit in trying to recover heat from the chimney gasses of a modem, efficient stove, as these carry a minority of the heat output. Taking heat from the chimney gasses can cause problems, as cooler gasses tend to form condensates in the chimney, which can deposit tars and creosotes, and a cool chimney can dramatically reduce the convective 'draw', which is required for good combustion. (This is not the case for open fires, where the majority of the heat - 85% or more - is lost up the chimney and some heat recovery is possible without affecting the draw.)

The stove 18 illustrated in Figure 2 does not have a back boiler. Many modern stoves that operate without a back boiler incorporate a refractory lining 24 that ensures an even distribution of the heat from the fire 26 to external surfaces of the stove 18 to avoid localised overheating.

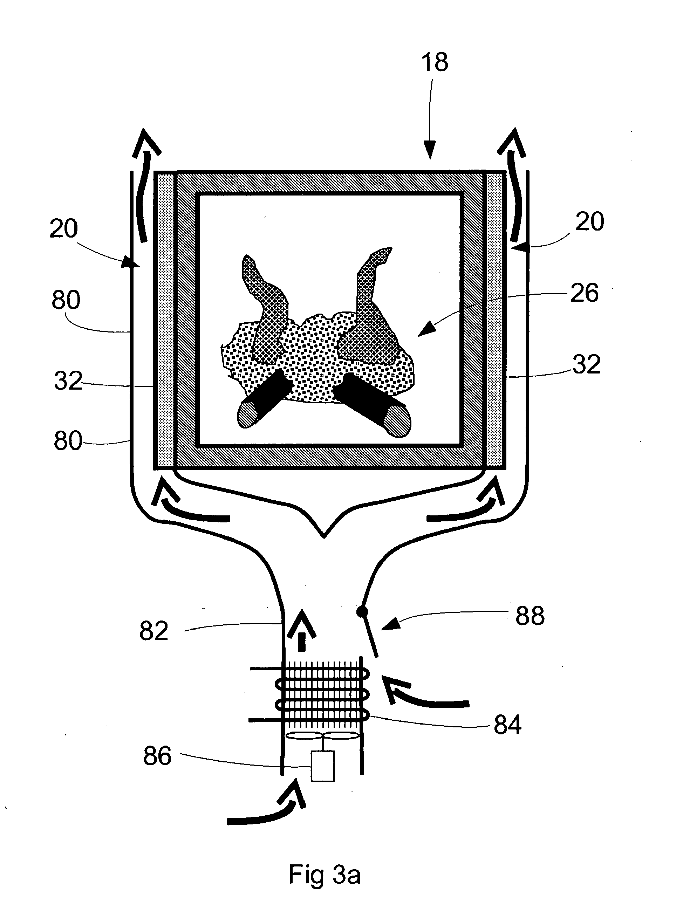

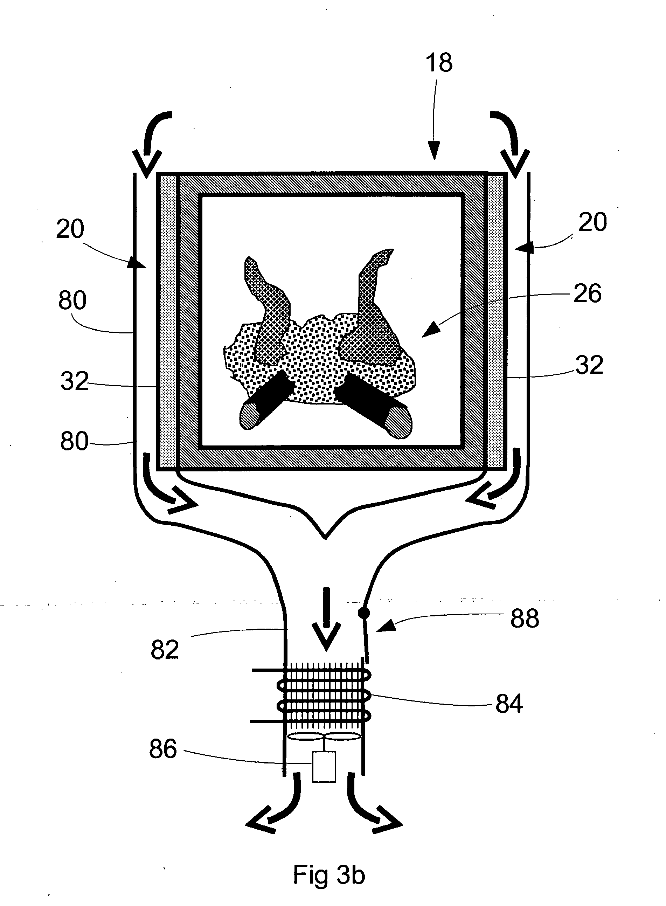

Given the basic configuration of a stove described above, the aim of the invention is to transfer some of the heat from external surfaces 20 of the stove 18 in a manner that can be controlled between maximising the heat going direct to the room, or some of the heat going to a water circuit feeding a central heating system. With reference now to Figure 3a and 3b, an embodiment of the invention is constituted by a modification of the stove 18 shown in Figure 2.

In Figures 3a and 3b, first and second operating modes are shown; natural convection in figure 3a, and forced convection figure 3b. When forced convection is in operation as explained below, some heat is transferred to the central heating system, whereas in natural convection all of the heat goes to the room.

In this embodiment, a conventional stove 18 is surrounded, typically on two sides 20 and a rear wall, by an enclosure 80 formed of thin sheet metal. The enclosure forms a vertically-extending air chamber that partly surrounds the stove, the chamber being C-shaped, in this embodiment, when viewed in plan. Vertical heat-convective fins 32 project from the stove into the chamber.

Below the stove 18, the enclosure 80 is connected into a vertical air duct 82. A heat exchanger 84 is located within the air duct 82 vertically above a motor-driven fan 86. The heat exchanger 84 is connected into a central heating system, as will be described below. This embodiment includes a heat exchanger 84 of the tube-and-fin type although other variants may be deployed.

When the fan 86 is off, air is drawn upwards (as indicated in Figure 3a) by natural convection through the duct 82 into the air chamber within the enclosure 80, from which it passes to the room. This is the embodiment operating in a first mode to transfer a maximum amount of heat to a surrounding space.

When the electric fan 86 is on, it draws heated air within the duct 82 downwards (as indicated in Figure 3b), countering the natural convection. The air is heated within the chamber and drawn over the heat exchanger 84 to heat the central heating system water.

The control of this embodiment can be very simple, since it is inherently fail-safe. A signal from the central heating system turns on the fan 86 to transfer heat when required. Alternatively, the fan 86 may be controlled locally by sensing the flow and temperature of water entering the heat exchanger 84, to ensure the fan only operates when water is flowing and the water temperature is not too high. Additional functionality can easily be incorporated. For example, there may be a thermostatic control that allows heat to be sent to the central heating system (by operating the fan) only when a room temperature selected by a user is achieved and subject to the same flow and temperature conditions described above. To ensure fail-safe operation, the fan 86 may be wired in series with a simple low-cost overheat switch sensing the water temperature at the top of the heat exchanger such as those often found in central heating boilers (typically bi-metallic, manually reset type). This operates to stop the fan 86 if the temperature of water within the heat exchanger 84 becomes excessive.

When the fan is on, the air leaving the duct 82 to the room will still carry some heat; the exiting air temperature cannot be lower than the central heating water temperature entering the heat exchanger. Therefore, not all of the heat from the sides 20 of the stove 18 can be transferred to the central heating system. However, by suitable arrangements of the chamber adjacent to the sides 20 of the stove 18 and the top of the heat exchanger, some heat will also be drawn in from the top of the stove and the outside of the flue. Alternatively, a configuration is possible in which the exhaust from the heat exchanger 84 is ducted back to the top of the stove sides such that the warm air exiting the ducting is recuperated to the chamber 80.

The water heat exchanger 84 is shown below the stove 18, but could be located behind the stove 18, provided a free air path is available for natural convection when the fan 86 is off.

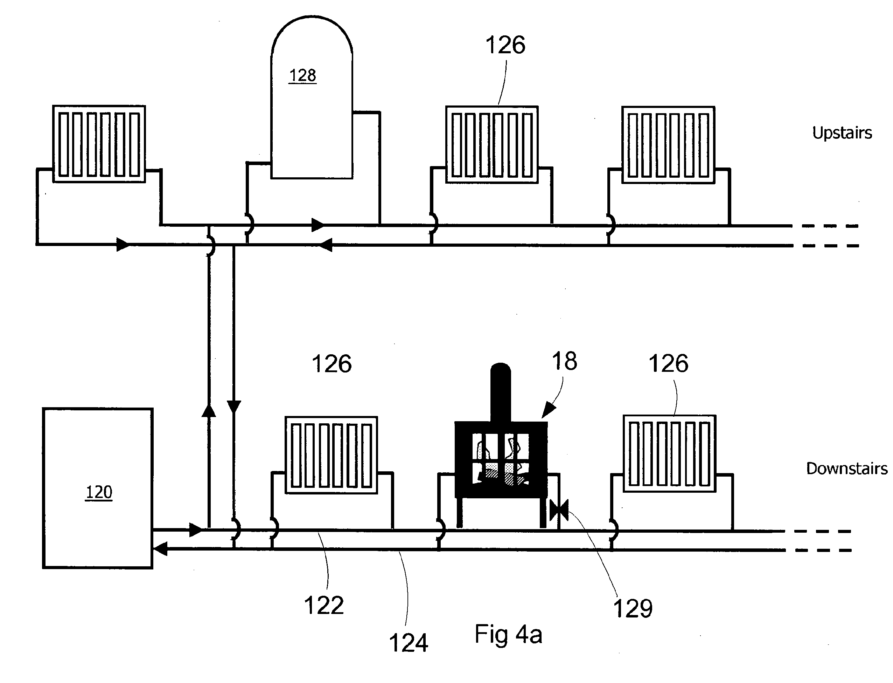

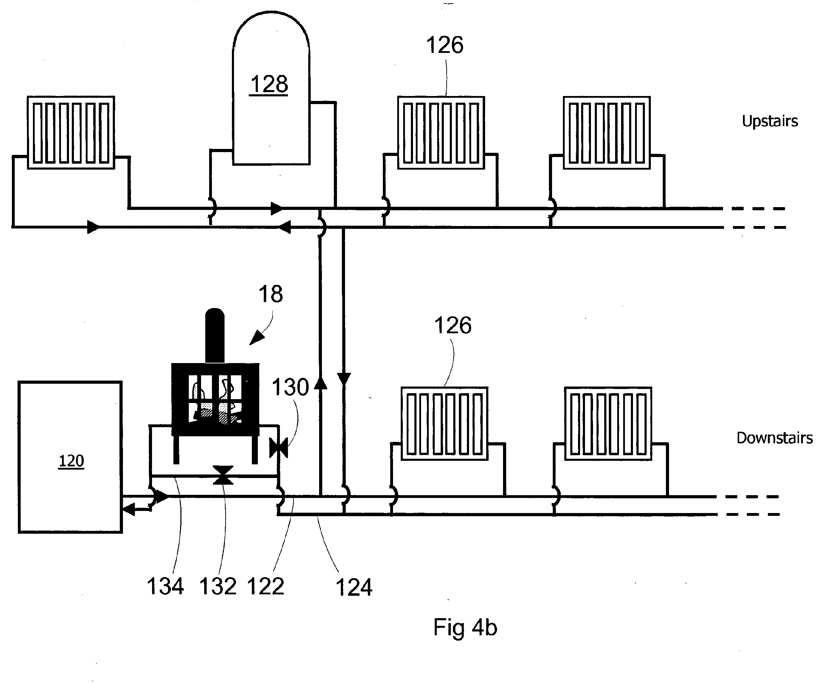

When the central heating is on but the stove is not lit, heat will be lost from the water heat exchanger 84 unless a thermally or electrically operated valve is incorporated in the central heating circuit. This is also true when the stove operates in the first (fan off) mode. Therefore, an electrically operated water valve connected to operate with the fan may be beneficial. Valves to control the flow of water in the heat exchanger 84 are shown in figures 4a and 4b and are described below

The fan 86 may also be operated when the stove is not lit to provide central heating output, such that the stove could replace a radiator. In this mode, the stove acts like a fan-assisted room radiator. In such a mode, it may be advantageous to operate the fan 86 at a higher speed to increase the air flow over the heat exchanger 84 because the heat exchanger will be sized for high air temperatures and low air flow rates when transferring heat from the fire in the second mode described above.

Although this embodiment is described for use with a stove that has distinct sides and rear surfaces, an analogous same design might be applied to stoves with curved surfaces. In such embodiments, the sheet metal enclosure follows the contour of the stove in question.

In yet further embodiments, the enclosure may be formed from non-metallic materials and may also be insulated on the outer surface.

In the embodiment as described above with reference to Figures 3a and 3b, the driving pressure created by natural convection is quite weak, so care must be taken to ensure that there is a reasonably free path for air flow. The heat exchanger design must be of sufficiently low pressure drop at the air flow rate induced by natural convection to ensure that air flow is not substantially impeded. Likewise, ducting 82 must be designed to ensure a low pressure drop and even distribution of air to the chamber 80.

Therefore, in an alternative arrangement of the embodiment there is incorporated a bypass that includes a flap 88 which is opened to allow free flow of air into the air duct to partly or completely bypass the heat exchanger 84 when the fan is off. When the fan is on, the flap 88 is closed to ensure the air passing over the heat exchanger 84 comes only from the chamber 80 and its temperature is therefore a maximum.

The flap 88 may be caused to close when the fan is running either by exploitation of the air pressure difference when the fan is operating or by active means, such as an electrical actuator, that operates when the fan is on.

Typical applications of an embodiment of the invention are shown in Figures 4a and 4b. Both examples provide a heating system that includes a conventional central heating boiler 120 that will typically be powered by gas, oil, solid fuel or electricity. Hot water is pumped from a flow outlet of the boiler into a flow pipe 122 of a heating circuit. Water is returned to a return inlet of the boiler 120 from a return pipe 124 of the heating circuit. Several radiators 126 and a hot water cylinder 128 are connected between the flow and return pipes 122, 124, each of which can be provided with a portion of the flow within the circuit as a whole. The radiators 126 and the hot water cylinder 128 may incorporate thermostatically operated valves to control local heat distribution. This far, the heating system described is entirely conventional, and need not be further elaborated.

In the embodiment of Figure 4a, the heat exchanger 84 of a stove 18 equipped with an assembly described above is connected to the central heating system in the same manner as a radiator, such that some of the flow from pipe 122 within the system passes into the bottom of the heat exchanger 84, and exits from the top of the heat exchanger 84 to be returned to the system through the return pipe 124. This manner of connection makes it a straightforward matter to connect the heat exchanger assembly to an existing heating system, since the pipes leaving the boiler need not be disturbed. Connection is no more complex than the addition of a new radiator and can be made at any part of the circuit by convenient small-bore pipes.

A valve 129 may be connected between the flow pipe 122 and the heat exchanger 84 to allow it to be isolated from the heating system. This valve may be electrically operated and is normally only opened if the fire is lit and it is desirable to divert heat to the central heating system (see comment regarding thermostatic control above). When the valve 129 is open, the control system can then sense whether there is flow in the central heating system to allow heat to be transferred from the stove by operating the fan 86. In this arrangement, if the fan 86 is operating and water is flowing in the heat exchanger 84, the fire 26 will add heat to the central heating system. If the fire 26 is not burning, the valve 129 will normally be closed unless it is desirable to operate the heat exchanger to output heat from the central heating system as described above.

The water that is heated by the heat exchanger 84 returns to the boiler through the return pipe 124, and mixes with water returning from other radiators 126 before reaching the boiler 120. As the temperature of the water leaving the heat exchanger 84 is higher than that in the flow pipe 122, the heated water entering the return pipe 124 adds heat energy to the return stream entering the boiler 120 by mixing with the cooler water returning from the radiators 126.

In an alternative application of an embodiment of the invention, as shown in Figure 4b, the heat exchanger 84 is connected to the central heating system, such that all water returning to the central heating boiler 120 through the return pipe 124 from the radiators passes into the bottom of the heat exchanger 84, and the top of the heat exchanger 84 is connected to the boiler return. Such connection is more appropriate for a new heating system installation where the layout of the central heating system can be arranged to accommodate such a connection. Configured in this manner, water entering the heat exchanger 84 will typically be cooler than at other parts of the flow circuit, such that greater heat transfer may take place from the fire 26 to the central heating circuit when the fire is lit, and less heat is transferred to the room from the outlet of duct 82 when the fan 86 is operating.

Clearly, it is not acceptable to provide a simple valve to isolate the heat exchanger 84 from the central heating circuit in the configuration of 4b, since this would prevent any flow within the circuit. Therefore, it may be beneficial to incorporate a controlled bypass circuit that includes two valves 130, 132 to divert water flow through the heat exchanger 84 to a bypass pipe 134 in parallel with the heat exchanger 84 when the stove is not lit. The valves 130 and 132 act in a mutually exclusive manner, such that when the valve 130 is open, the valve 132 is closed, and *vice versa.* This may be usefully implemented by the valve 132 being of the normally-open type and the valve 130 being of the normally-closed type, such that both can be operated from a single electrical source which when activated allows flow through the heat exchanger 84 and when deactivated diverts flow through the bypass 134. Alternatively, a single 'divert' valve may be incorporated to send flow to either the heat exchanger or the bypass, which may have the advantage of being more versatile in application as the bypass 134 could be excluded (blanked off or isolated by a manually operated valve) for the configuration of 4a and connected for the configuration of 4b.

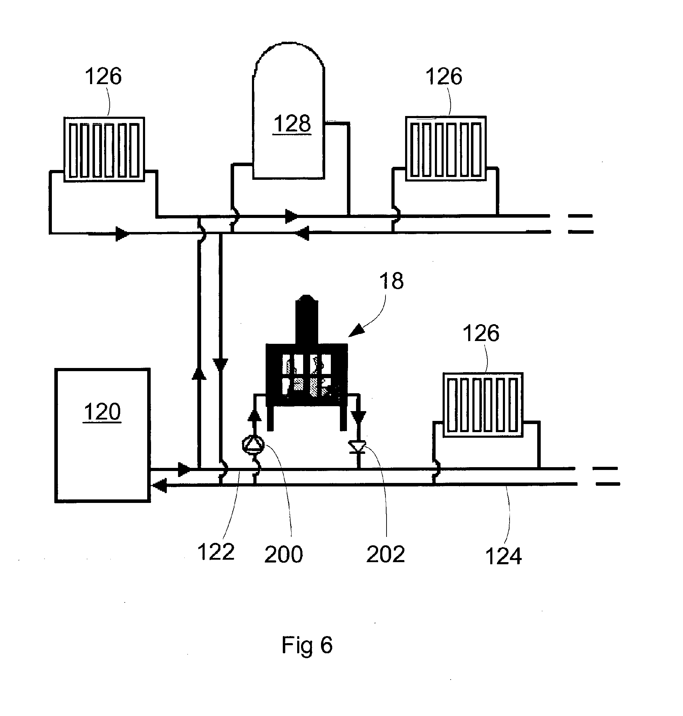

A modification to the system of Figures and 4a is shown in Figure 6. Components of this embodiment that are in common to the system of Figures 4a will be given the same reference signs as in those figures and will not be described further.

This embodiment incorporates an alternative control mechanism. In this embodiment, a subsidiary water pump 200 is connected in series with the heat exchanger 84. The pump 200 is configured in parallel to the central heating pump to take water from the cooler return circuit 124 and deliver it, through the heat exchanger, to the warmer flow circuit 122. When the fan 86 is operated, the subsidiary water pump 200 is also operated to circulate central heating water through the heat exchanger 84 irrespective of whether or not the central heating circuit pump is running. In this embodiment, the stove can supply heat to the central heating circuit independent of the operating status of the central heating system pump. A non-return valve 202 is connected in series with the subsidiary water pump 200. The purpose of the non-return valve 202 is to prevent flow of water through the heat exchanger when the system is operating in the first operating mode (that is, with the fan off). This avoids the need to provide electrically-operated valves to support operation of the heat exchanger.

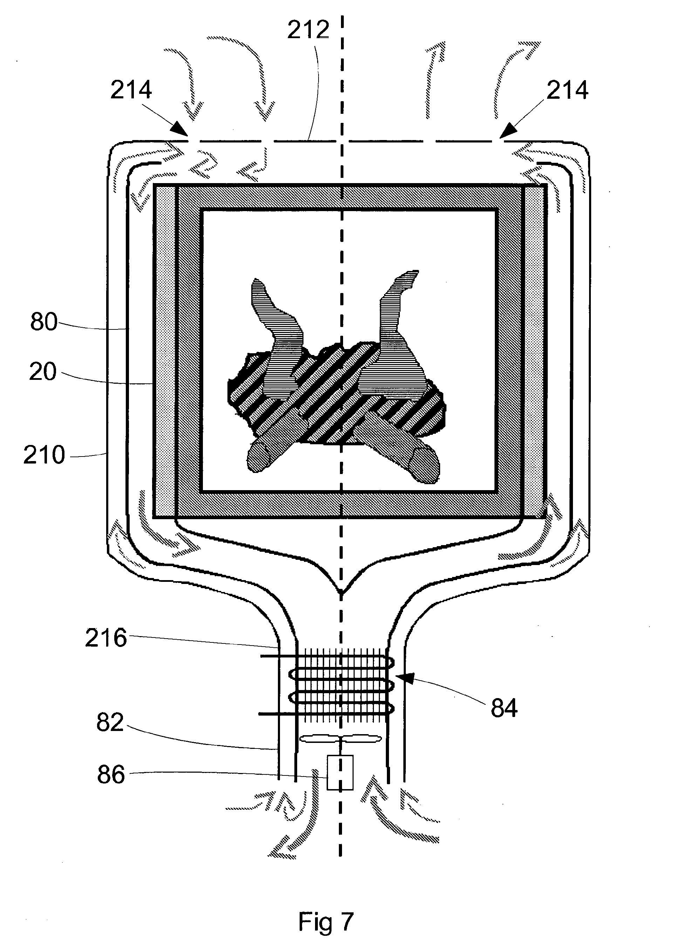

The embodiments of the invention described above can be further enhanced by addition of a second outer cover 210 as shown in Figure 7. The second outer cover 210 substantially completely encloses the cover 80 and defines an outer air chamber between itself and the cover 80. The second outer cover 210 has a top panel 212 through which several apertures 214 (which may be in the form of slots or a grille) are formed to connect the stove 20 to surrounding atmosphere to allow air to flow.

In Figure 7, on the right hand side, arrows indicate the direction of air flow in the first mode of operation (natural convection, fan off). On the left hand side, arrows indicate air flow the second mode of operation (forced convection, fan on) to transfer heat to the heat exchanger 84. These two modes of operation are mutually exclusive and are shown on one diagram for illustration purposes only. As with the embodiments of Figures 3a and 3b, the action of turning the fan on is to reverse the natural, upward flow of air over hot surfaces 20 of the stove in the duct formed between the stove sides 20 and the cover 80. When operating in the first mode with the fan off, the outer air chamber acts as a second convective space that operates to draw ambient air in at the bottom of the duct 216. This air is heated by contact with cover 80, rises and joins the higher temperature airstream inside the cover 80 previously described to exit at the top of the stove through the apertures 214. In this mode of operation, the second outer cover 210 has the effect of further reducing the outer skin temperature which may be advantageous for reducing the radiant heat transfer from the stove surfaces.

In the second mode of operation, in which the fan draws hot air from the stove sides 20 to the heat exchanger 84, air continues to flow upwards through the outer air chamber 218 by natural convection and due to reduced pressure at the upper part of this chamber 218 caused by operation of the fan. In this mode, heated air leaving the top of the outer air chamber 218 joins air drawn in through the apertures 214 by operation of the fan and is further heated by the stove side 20. Operating in this mode, the outer air chamber 218 described acts to recuperate losses that would otherwise occur from the hot outer side of cover 80 and has the benefit of increasing the temperature of the air reaching the heat exchanger 84.

In the configuration of Figure 7, if the inlet of ducted air travelling thorough the outer chamber 218 is arranged to be close to the exiting warm air from the heat exchanger 84, further recuperation may be achieved through recovery of warm air leaving the heat exchanger which would otherwise be lost to the room. The overall effect of this further embodiment is to increase the amount of heat that can be recovered to the central heating water when operating in the second mode.

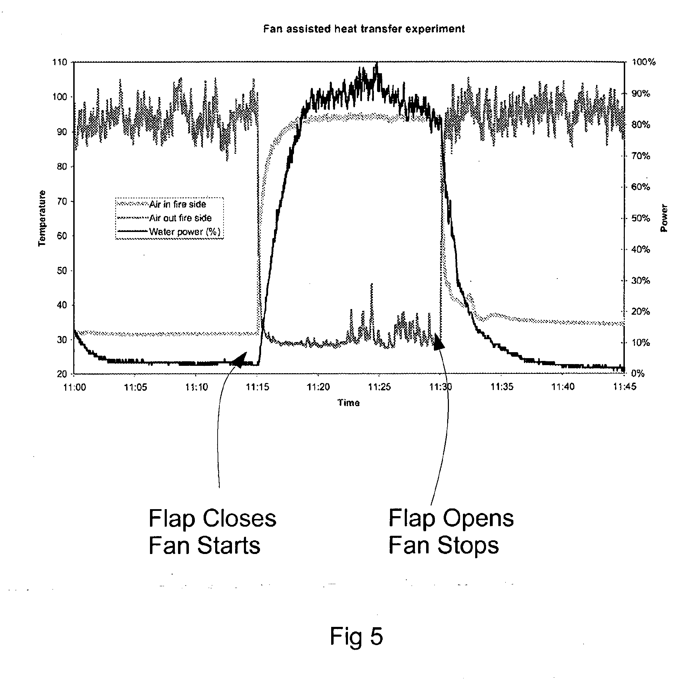

The practical effect of the embodiments described above is to provide a switchable control of heat transfer between the stove and the central heating system. At one setting, substantially all heat is passed directly to the room. At the other setting, much of the convective heat passing to the heat exchanger 84 and thereby to the central heating system. In the latter condition, radiative and convective heat from the bottom, front and top of the stove still passes to the room. Results of an experimental investigation of the configuration described in figures 3a and 3b will now be described with reference to Figure 5.

The heat exchanger arrangement described above has been investigated experimentally. One side of a stove was simulated by electrically heating a finned surface to maintain it at approximately 200°C. A plate was added to form a fire side chamber as described above and ducting was added to connect the chamber to a tube-and-fin heat exchanger and a fan, in the configuration of figures 3a and 3b. The graph of Figure 5 shows the effect of operating the fan to reverse the natural convection and divert heated air to a tube-and-fin heat exchanger.

Before the fan is operated, hot air leaves the top of the fire side chamber by natural convection as shown by the curve described as "Air out fire side" on the chart, and the air entering the chamber from the bottom is at ambient temperature as shown by the curve described as "Air in fire side" (air temperature in the duct). When the fan is operated to overcome the natural convection and reverse the air flow, the temperatures of these two streams reverse, showing that ambient air enters the top of the fire side chamber and heated air passes downwards through the duct. As soon as the fan operates, heat starts transferring to the central heating water, rising to a maximum over a couple of minutes as shown by the curve described as "Water power (%)". When the fan is turned off, natural convection is quickly re-established so that heat is dissipated to the room from the top of the fire side chamber as shown by the "Air out fire side" curve. Heat transferred to the water drops away rapidly as the heat exchanger components cool in the ambient air stream induced by natural convection.

The experimental evaluation demonstrates how controllable the above embodiment is, and that no heat transfers to the heat exchanger when the fan is not operative. Provided operation of the fan is linked to the water temperature in the heat exchanger as described above (potentially including overheat protection), the water in the heat exchanger cannot boil and is therefore inherently safe.

## Claims

1. A stove that (18) incorporates a heat capturing apparatus for capturing heat from outer surfaces of the stove, the heat capturing apparatus comprising an air-water heat exchanger, the heat exchanger (84) having an air side and a water side and being operative to transfer heat between air on the air side and water flowing in channels in the water side, **characterised by** the heat capturing apparatus including an air duct (82) through which air heated by the stove can pass, and an enclosure surrounding the stove, said enclosure (80) forming a chamber (20) that partially surrounds the stove, the duct (82) being connected to the enclosure (80), and control means operable to control the flow of air within the heat capturing apparatus by the operation of a fan (86); wherein in a first mode, the control means allows air to flow from the air duct (82) to said chamber, then to a space surrounding the stove at least partly by natural convection and in a second mode, the control means induces air to flow from said chamber to the air duct, then to the air side of the heat exchanger (84), such that air within the duct flows in opposite directions in the first and second modes.

2. A stove according to claim 1 in which, in the first mode, air flows generally upward within the air duct (82).

3. A stove according to claim 1 or claim 2 in which the control means includes a fan (86) that is operable to induce a flow of air in the heat capturing apparatus during operation in the second mode.

4. A stove according to claim 3 in which the fan (86) is operable to draw air from a space surrounding the stove into the air duct (82) for heating by the stove (18) and then to the heat exchanger (84).

5. A stove according to claim 3 or claim 4 in which, when the fan (86) is not operating, air can be drawn from a space surrounding the stove (18) for heating by the stove, and subsequently returned to the space surrounding the stove by natural convection.

6. A stove according to any one of claims 3 to 5 in which the state of the control means is primarily determined by whether or not the fan (86) is running.

7. A stove according to any preceding claim that further includes a bypass means (88) that allows air to flow through the duct to receive air transferred from the stove (18) without passing through the heat exchanger (84) in the first mode.

8. A stove according to claim 7 in which the bypass means includes a closable opening to surrounding air in the duct between the stove (18) and the heat exchanger (84).

9. A stove according to any preceding claim in which the air duct includes a plate, a first portion of the air duct being defined as a chamber that is formed between the plate and a heating surface of a stove.

10. A stove according to any preceding claim in which the air duct (82) has a second portion that connects the lower part of the first portion of the air duct to the air side of the heat exchanger (84).

11. A stove according to any preceding claim in which the air duct (82) causes air to flow over one or more external heating surfaces (20) of the stove.

12. A stove according to any preceding claim in which the apparatus for capturing heat further includes an outer cover (210) that substantially completely encloses the enclosure (80) to create a second air duct (216) between itself and the enclosure (80).

13. A stove according to claim 12 in which air can be caused to flow in the second air duct (216) by natural convection to reduce an outer casing temperature of the heat capturing apparatus.

14. A stove according to any preceding claim in which the control means is fail-safe such that it diverts air from the heat exchanger (84) in the event of there being insufficient flow of water within its water side.

15. A heating installation that includes a stove according to any preceding claim and a central heating system that includes a pumped water circulation circuit that operates to transport heat from a boiler (120) to one or more radiators (126), the water side of the heat exchanger (84) being connected to the circulation circuit such that water from the circulation circuit is caused to flow through the heat exchanger while the pump of the circulation circuit is operational.

16. A heating installation according to claim 15 in which the control means operates to minimise the flow of heated air from the stove (18) to the heat exchanger (84) when the pump of the circulation system is not operational.

17. A heating installation according to claim 15 or claim 16 in which the water side of the heat exchanger is connected between a flow and a return pipe (122; 124) of the central heating system in parallel with radiators (126) of the central heating system.

18. A heating installation according to claim 17 further including a water pump (200) connected in series with the heat exchanger (84).

## Patentansprüche

1. Ofen (18), in den eine Wärmerückgewinnungsvorrichtung zur Rückgewinnung von Wärme von Außenflächen des Ofens eingebaut ist, wobei die Wärmerückgewinnungsvorrichtung Folgendes aufweist: einen Luft-Wasser-Wärmetauscher, wobei der Wärmetauscher (84) eine Luftseite und eine Wasserseite hat und zum Übertragen von Wärme zwischen Luft auf der Luftseite und in Führungen in der Wasserseite fließendem Wasser funktionell ist, **dadurch gekennzeichnet, dass** die Wärmerückgewinnungsvorrichtung einen Luftkanal (82), durch den vom Ofen erwärmte Luft hindurchströmen kann, und eine den Ofen umgebende Einhausung beinhaltet, wobei die genannte Einhausung (80) eine Kammer (20) bildet, die den Ofen teilweise umgibt, wobei der Kanal (82) mit der Einhausung (80) verbunden ist, und eine Steuereinrichtung zum Steuern des Luftstroms innerhalb der Wärmerückgewinnungsvorrichtung durch den Betrieb eines Ventilators (86), wobei die Steuereinrichtung in einer ersten Betriebsart Luft wenigstens teilweise durch natürliche Konvektion vom Luftkanal (82) zur genannten Kammer, dann zu einem den Ofen umgebenden Raum strömen lässt und die Steuereinrichtung in einer zweiten Betriebsart veranlasst, dass Luft aus der genannten Kammer zum Luftkanal, dann zur Luftseite des Wärmetauschers (84) strömt, so dass Luft innerhalb des Kanals in der ersten und der zweiten Betriebsart in entgegengesetzten Richtungen strömt.

2. Ofen nach Anspruch 1, bei dem in der ersten Betriebsart Luft im Luftkanal (82) im Allgemeinen aufwärts strömt.

3. Ofen nach Anspruch 1 oder Anspruch 2, bei dem die Steuereinrichtung einen Ventilator (86) beinhaltet, der betrieben werden kann, um während des Betriebs in der zweiten Betriebsart einen Luftstrom in der Wärmerückgewinnungsvorrichtung zu veranlassen.

4. Ofen nach Anspruch 3, bei dem der Ventilator (86) betrieben werden kann, um Luft aus einem den Ofen umgebenden Raum in den Luftkanal (82) zur Erwärmung durch den Ofen (18) und dann zum Wärmetauscher (84) zu ziehen.

5. Ofen nach Anspruch 3 oder Anspruch 4, bei dem, wenn der Ventilator (86) nicht in Betrieb ist, Luft aus einem den Ofen (18) umgebenden Raum zur Erwärmung durch den Ofen gezogen werden kann und anschließend durch natürliche Konvektion zu dem den Ofen umgebenden Raum zurückgeführt werden kann.

6. Ofen nach einem der Ansprüche 3 bis 5, bei dem der Zustand der Steuereinrichtung hauptsächlich dadurch bestimmt wird, ob der Ventilator (86) läuft oder nicht.

7. Ofen nach einem der vorhergehenden Ansprüche, der ferner eine Bypasseinrichtung (88) hat, die in der ersten Betriebsart Luft durch den Kanal strömen lässt, um von dem Ofen (18) übertragene Luft zu empfangen, ohne durch den Wärmetauscher (84) hindurchgeführt zu werden.

8. Ofen nach Anspruch 7, bei dem die Bypasseinrichtung eine verschließbare Öffnung zu umgebender Luft in dem Kanal zwischen dem Ofen (18) und dem Wärmetauscher (84) beinhaltet.

9. Ofen nach einem der vorhergehenden Ansprüche, bei dem der Luftkanal eine Platte beinhaltet, wobei ein erster Abschnitt des Luftkanals als eine Kammer definiert ist, die zwischen der Platte und einer Heizfläche eines Ofens ausgebildet ist.

10. Ofen nach einem der vorhergehenden Ansprüche, bei dem der Luftkanal (82) einen zweiten Abschnitt hat, der das untere Teil des ersten Abschnitts des Luftkanals mit der Luftseite des Wärmetauschers (84) verbindet.

11. Ofen nach einem der vorhergehenden Ansprüche, bei dem der Luftkanal (82) verursacht, dass Luft über eine oder mehrere äußere Heizflächen (20) des Ofens strömt.

12. Ofen nach einem der vorhergehenden Ansprüche, bei dem die Vorrichtung zur Wärmerückgewinnung ferner eine Außenhülle (210) beinhaltet, die die Einhausung (80) im Wesentlichen vollständig umschließt, um zwischen ihr selbst und der Einhausung (80) einen zweiten Luftkanal (216) zu bilden.

13. Ofen nach Anspruch 12, bei dem verursacht werden kann, dass Luft durch natürliche Konvektion in dem zweiten Luftkanal (216) strömt, um eine Außengehäusetemperatur der Wärmerückgewinnungsvorrichtung zu senken.

14. Ofen nach einem der vorhergehenden Ansprüche, bei dem die Steuereinrichtung ausfallsicher ist, so dass sie Luft vom Wärmetauscher (84) umlenkt, falls der Wasserdurchfluss in seiner Wasserseite unzureichend sein sollte.

15. Heizungsanlage, die einen Ofen nach einem der vorhergehenden Ansprüche und ein Zentralheizungssystem beinhaltet, das einen gepumpten Wasserumwälzkreislauf beinhaltet, der die Aufgabe hat, Wärme von einem Heizungskessel (120) zu einem oder mehreren Heizkörpern (126) zu transportieren, wobei die Wasserseite des Wärmetauschers (84) mit dem Umwälzkreislauf verbunden ist, so dass verursacht wird, dass Wasser aus dem Umwälzkreislauf durch den Wärmetauscher strömt, während die Pumpe des Umwälzkreises in Betrieb ist.

16. Heizungsanlage nach Anspruch 15, bei der die Steuereinrichtung die Aufgabe hat, den Durchfluss erwärmter Luft vom Ofen (18) zum Wärmetauscher (84) zu minimieren, wenn die Pumpe des Umwälzsystems nicht in Betrieb ist.

17. Heizungsanlage nach Anspruch 15 oder Anspruch 16, bei der die Wasserseite des Wärmetauschers zwischen ein Vorlauf- und ein Rücklaufrohr (122, 124) des Zentralheizungssystems, parallel zu den Heizkörpern (126) des Zentralheizungssystems, angeschlossen ist.

18. Heizungsanlage nach Anspruch 17, die ferner eine mit dem Wärmetauscher (84) in Reihe geschaltete Wasserpumpe (200) beinhaltet.

## Revendications

1. Poêle qui (18) incorpore un appareil de récupération de la chaleur pour récupérer la chaleur à partir des surfaces externes du poêle, l'appareil de récupération de la chaleur comprenant un échangeur de chaleur air-eau, l'échangeur de chaleur (84) ayant un côté air et un côté eau et étant opérationnel pour transférer de la chaleur entre de l'air sur le côté air et de l'eau s'écoulant dans des canaux dans le côté eau, **caractérisé par** l'appareil de récupération de la chaleur incluant un conduit d'air (82) à travers lequel l'air chauffé par le poêle peut passer, et une enceinte entourant le poêle, ladite enceinte (80) formant une chambre (20) qui entoure partiellement le poêle, le conduit (82) étant relié à l'enceinte (80), et un moyen de commande actionnable pour commander l'écoulement d'air à l'intérieur de l'appareil de récupération de la chaleur par le fonctionnement d'un ventilateur (86) ; où, dans un premier mode, le moyen de commande permet à l'air de s'écouler à partir du conduit d'air (82) vers ladite chambre, puis vers un espace entourant le poêle au moins partiellement par convection naturelle et dans un second mode, le moyen de commande induit l'air à s'écouler à partir de ladite chambre vers le conduit d'air, puis vers le côté air de l'échangeur de chaleur (84), de telle sorte que l'air dans le conduit s'écoule dans des directions opposées dans les premier et second modes.

2. Poêle selon la revendication 1, dans lequel, dans le premier mode, l'air s'écoule généralement vers le haut à l'intérieur du conduit d'air (82).

3. Poêle selon la revendication 1 ou la revendication 2, dans lequel le moyen de commande inclut un ventilateur (86) qui est actionnable pour induire un écoulement d'air dans l'appareil de récupération de la chaleur pendant le fonctionnement dans le second mode.

4. Poêle selon la revendication 3, dans lequel le ventilateur (86) est actionnable pour aspirer l'air à partir d'un espace entourant le poêle dans le conduit d'air (82) pour le chauffage par le poêle (18) et puis vers l'échangeur de chaleur (84).

5. Poêle selon la revendication 3 ou la revendication 4, dans lequel, lorsque le ventilateur (86) ne fonctionne pas, l'air peut être aspiré à partir d'un espace entourant le poêle (18) pour le chauffage par le poêle, et ensuite restitué à l'espace entourant le poêle par convection naturelle.

6. Poêle selon une quelconque des revendications 3 à 5, dans lequel l'état du moyen de commande est principalement déterminé par le fait que le ventilateur (86) est en cours de fonctionnement ou pas.

7. Poêle selon une quelconque revendication précédente, qui inclut en outre un moyen de dérivation (88) qui permet à l'air de s'écouler à travers le conduit afin de recevoir l'air transféré à partir du poêle (18) sans passer à travers l'échangeur de chaleur (84) dans le premier mode.

8. Poêle selon la revendication 7, dans lequel le moyen de dérivation inclut une ouverture pouvant être fermée à l'air environnant dans le conduit entre le poêle (18) et l'échangeur de chaleur (84).

9. Poêle selon une quelconque revendication précédente, dans lequel le conduit d'air inclut une plaque, une première partie du conduit d'air étant définie en tant que chambre qui est formée entre la plaque et une surface de chauffage d'un poêle.

10. Poêle selon une quelconque revendication précédente, dans lequel le conduit d'air (82) a une seconde partie qui relie la partie inférieure de la première partie du conduit d'air au côté air de l'échangeur de chaleur (84).

11. Poêle selon une quelconque revendication précédente, dans lequel le conduit d'air (82) amène l'air à circuler au-dessus d'une ou de plusieurs surfaces de chauffage externes (20) du poêle.

12. Poêle selon une quelconque revendication précédente, dans lequel l'appareil pour récupérer la chaleur inclut en outre un couvercle externe (210) qui renferme quasiment complètement l'enceinte (80) afin de créer un second conduit d'air (216) entre lui-même et l'enceinte (80).

13. Poêle selon la revendication 12, dans lequel de l'air peut être amené à s'écouler dans le second conduit d'air (216) par convection naturelle afin de réduire la température d'un boîtier externe de l'appareil de récupération de la chaleur.

14. Poêle selon une quelconque revendication précédente, dans lequel le moyen de commande est à sécurité intégrée de telle sorte qu'il dévie l'air en provenance de l'échangeur de chaleur (84) dans l'éventualité d'un écoulement insuffisant d'eau à l'intérieur de son côté eau.

15. Installation de chauffage qui inclut un poêle selon une quelconque revendication précédente et système de chauffage central qui inclut un circuit de circulation d'eau pompée qui fonctionne pour transporter de la chaleur à partir d'une chaudière (120) vers un ou plusieurs radiateurs (126), le côté eau de l'échangeur de chaleur (84) étant relié au circuit de circulation de telle sorte que l'eau en provenance du circuit de circulation est amenée à s'écouler à travers l'échangeur de chaleur tandis que la pompe du circuit de circulation est opérationnelle.

16. Installation de chauffage selon la revendication 15, dans laquelle le moyen de commande fonctionne afin de minimiser l'écoulement d'air chauffé à partir du poêle (18) vers l'échangeur de chaleur (84) lorsque la pompe du système de circulation n'est pas opérationnelle.

17. Installation de chauffage selon la revendication 15 ou la revendication 16, dans laquelle le côté eau de l'échangeur de chaleur est relié entre un écoulement et un tuyau de retour (122 ; 124) du système de chauffage central en parallèle à des radiateurs (126) du système de de chauffage central.

18. Installation de chauffage selon la revendication 17, incluant en outre une pompe à eau (200) reliée en série avec l'échangeur de chaleur (84).
